# EUROPÄISCHE PATENTANMELDUNG

(11) **EP 0 745 478 A2**
(43) Veröffentlichungstag der Anmeldung: **04.12.1996**
(21) Anmeldenummer: 96108064.5
(22) Anmeldetag: 21.05.1996
(51) Int. Cl.: B32B 29/00, D06N 7/00

(54) **Verfahren zur Oberflächenmodifizierung von Substraten**

(30) Priorität: 31.05.1995 DE 19519923
(71) Anmelder: Forbo- Resopal GmbH, 64823 Gross-Umstadt (DE)
(72) Erfinder: Holzer, Herbert, Dr., 64823 Gross-Umstadt (DE)
(74) Vertreter: Katscher, Helmut, Dipl.-Ing.

(57) **Zusammenfassung**

Zur Oberflächenmodifizierung von Substraten, insbesondere Bodenbelägen wie Linoleum, wird auf die Oberfläche des Substrats (1) ein Lack (4) aufgetragen. In die noch flüssige Lackschicht (5) wird eine saugfähige Papierlage (7) eingebettet. Der Lack wird anschließend durch Ultraviolett- oder Elektronenstrahlung ausgehärtet. Die eingebrachte Papierlage (1) ermöglicht durch ihre Beschaffenheit, insbesondere ihre Inhaltsstoffe oder durch ihren Aufdruck die gewünschte Modifizierung der Oberfläche.

## Beschreibung

Die Erfindung betrifft ein Verfahren zur Oberflächenmodifizierung von Substraten, wobei auf die Oberfläche des Substrats ein Lack aufgetragen und ausgehärtet wird.

Typische Substrate, für die eine Modifizierung der Oberfläche erwünscht ist, sind elastische Materialbahnen, die beispielsweise als Bodenbeläge Verwendung finden, wie Linoleum, PVC, Kautschuk u. dgl.. Die unbehandelte Oberfläche dieser Substrate ist in vielen Fällen anfällig für Verschleiß und/oder ist in ihrer farblichen Oberflächengestaltung zu eintönig.

Um diese Nachteile zu beseitigen, ist es bekannt, einen aushärtenden Lack aufzutragen. So kann eine härtere Lackschicht die Verschleißfestigkeit eines an sich wenig verschleißbeständigen Substrats an der Oberfläche erhöhen. Zugleich kann durch diesen Lackauftrag eine gewünschte optische Oberflächengestaltung vorgenommen werden, beispielsweise eine Einfärbung. Beiden Möglichkeiten der Oberflächenmodifizierung durch Lackauftrag sind in der Praxis aber enge Grenzen gesetzt. So läßt sich die Härte und Verschleißfestigkeit eines Lackauftrags nicht in allen Fällen so steigern, daß die gewünschte Verschleißfestigkeit erreicht wird. Hinsichtlich der Farbgestaltung bietet der Lackauftrag zudem nur sehr geringe Variationsmöglichkeiten.

Aufgabe der Erfindung ist es daher, ein Verfahren der eingangs genannten Gattung so auszubilden, daß bei einem einfachen Verfahrensablauf ein weiter Bereich von Modifikationsmöglichkeiten für die Oberfläche eröffnet wird.

Diese Aufgabe wird erfindungsgemäß dadurch gelöst, daß in die aufgetragene, noch flüssige Lackschicht eine saugfähige Papierlage eingebettet wird und daß der Lack anschließend durch Ultraviolett- oder Elektronenstrahlung ausgehärtet wird.

Der Lack durchtränkt die aufgelegte Papierlage und treibt die in den Kapillaren befindliche Luft aus dem Papier, so daß eine transparente feuchte Schicht entsteht. In der nachfolgenden Strahlenbehandlung wird diese Schicht durch strahleninduzierte Polymerisation des Lacks schlagartig ausgehärtet.

Das auf diese Weise in die Lackschicht eingebrachte und innig mit dieser verbundene Papier ermöglicht es, der Lackschicht diejenigen Eigenschaften zu erteilen, die im Einzelfall gewünscht werden und die sich durch Auswahl des Lacks allein nicht erreichen lassen.

Durch die Verwendung eines gefärbten oder bedruckten Papiers als Papierlage kann der Oberfläche jedes gewünschte farbliche Muster gegeben werden. Die Lackaushärtung erfolgt in diesem Fall durch Elektronenstrahlung, die auch die gefärbte oder bedruckte Papierlage durchdringt.

Eine wesentliche Erhöhung der Oberflächenhärte und damit der Verschleißfestigkeit läßt sich erreichen, wenn als Papierlage ein Festkörper, vorzugsweise Korundpartikel enthaltendes Papier verwendet wird.

Weitere vorteilhafte Ausgestaltungen des Erfindungsgedankens sind Gegenstand weiterer Unteransprüche.

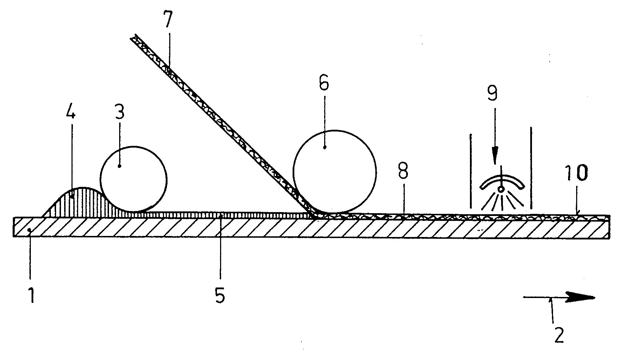

Nachfolgend werden Ausführungsbeispiele der Erfindung anhand der Zeichnung näher erläutert.

Die Zeichnung zeigt im senkrechten Schnitt eine Bahn eines lackierbaren Substrats 1, beispielsweise Linoleum. Die Bahn des Substrats 1 wird durch eine (nicht dargestellte) Transportvorrichtung kontinuierlich in Richtung des Pfeiles 2 fortbewegt. Mittels einer Auftragswalze 3, die auch durch einen Rakelstab ersetzt sein könnte, wird eine auf die Oberfläche des Substrats aufgetragene, sich als Wulst vor der Auftragswalze 3 stauende Menge eines flüssigen Lacks 4 zu einem flüssigen Lackbett oder einer Lackschicht 5 ausgebreitet. In das flüssige Lackbett wird mittels einer Andruckrolle 6 eine saugfähige Papierlage 7 eingedrückt und eingebettet. Die Papierlage 7 besteht beispielsweise aus einer dünnen Spezialpapierbahn aus -Zellulose mit hoher Luftdurchlässigkeit. Dieses Spezialpapier wird auch als Overlaypapier bezeichnet, das beim vorliegenden Beispiel ein Flächengewicht von etwa 20-50 g/m² hat. Die Dicke der Lackschicht 5 wird so eingestellt, daß sie angenähert der Dicke der Papierlage 7 entspricht.

Die Lackschicht 5 durchtränkt die Papierlage 7 und sie treibt die in den Kapillaren befindliche Luft aus dem Papier, so daß eine feuchte Schicht 8 entsteht, die bei Verwendung von ungefärbtem Papier transparent ist.

Anschließend durchläuft das Substrat 1 mit der darauf befindlichen Schicht eine Strahlenstation 9, in der eine UV-Strahlenquelle oder eine Elektronenstrahlenquelle den Lack durch strahleninduzierte Polymerisation schlagartig aushärtet. Es entsteht eine ausgehärtete Modifizierungsschicht 10 an der Oberfläche des Substrats 1, die der Oberfläche die gewünschte Eigenschaft gibt.

Bei der Härtung durch UV-Strahlung ist nur eine Härtung einer vollkommen transparenten Schicht 8 bis zu einer Tiefe von ca. 30 µ möglich. Mittels Elektronenstrahlen kann auch eine pigmentierte Lackschicht bzw. eine gefärbte oder stark bedruckte Papierbahn gehärtet werden.

Zur Erzielung einer harten und/oder verschleißfesten Oberfläche wird als Papierlage 7 ein Festkörper enthaltendes Papier verwendet, beispielsweise ein korundhaltiges Overlaypapier. Durch Verwendung von bedrucktem Overlaypapier besteht die Möglichkeit, eine Vielzahl von optischen Mustern zu gestalten.

## Patentansprüche

1. Verfahren zur Oberflächenmodifizierung von Substraten (1), wobei auf die Oberfläche des Substrats (1) ein Lack (4) aufgetragen und ausgehärtet wird, dadurch gekennzeichnet, daß in die aufgetragene, noch flüssige Lackschicht (5) eine saugfähige Papierlage (7) eingebettet wird und daß der Lack anschließend durch Ultraviolett- oder Elektronenstrahlung ausgehärtet wird.

2. Verfahren nach Anspruch 1, dadurch gekennzeichnet, daß die Lackschicht (5) in einer Dicke aufgetragen wird, die angenähert der Dicke der Papierlage (7) entspricht.

3. Verfahren nach Anspruch 1, dadurch gekennzeichnet, daß die Papierlage (7) aus α-Zellulose mit hoher Luftdurchlässigkeit besteht.

4. Verfahren nach Anspruch 1, dadurch gekennzeichnet, daß als Papierlage (7) ein gefärbtes oder bedrucktes Papier verwendet wird und die Lackaushärtung durch Elektronenstrahlung erfolgt.

5. Verfahren nach Anspruch 1, dadurch gekennzeichnet, daß eine pigmentierte Lackschicht (5) aufgetragen wird und die Lackaushärtung durch Elektronenstrahlung erfolgt.

6. Verfahren nach Anspruch 1, dadurch gekennzeichnet, daß als Papierlage (7) ein Festkörper enthaltendes Papier verwendet wird.

7. Verfahren nach Anspruch 6, dadurch gekennzeichnet, daß als Papierlage (7) ein Korundpartikel enthaltendes Papier verwendet wird.
